# EUROPÄISCHE PATENTSCHRIFT

(11) **EP 2 559 361 B1**
(45) Veröffentlichungstag und Bekanntmachung des Hinweises auf die Patenterteilung: **06.05.2015**
(21) Anmeldenummer: 12176946.7
(22) Anmeldetag: 18.07.2012
(51) Int. Cl.: A47J 31/44

(54) **Getränkespender**
Drinks dispenser
Distributeur de boissons

(30) Priorität: 29.07.2011 DE 102011080092
(43) Veröffentlichungstag der Anmeldung: 20.02.2013
(73) Patentinhaber: BSH Hausgeräte GmbH, 81739 München (DE)
(72) Erfinder: Bauer, Franz, 83374 Traunwalchen (DE); Gruber, Michael, 83362 Surberg (DE); Heilmaier, Marion, 83317 Teisendorf (DE); Hörner, Wolfgang, 83278 Traunstein (DE)

(56) Entgegenhaltungen:
- DE-A1- 10 052 900
- DE-T2- 69 716 066
- DE-U- 7 319 728
- DE-U1-202009 004 756
- US-A- 5 217 288

## Beschreibung

Die Erfindung betrifft einen Getränkespender nach dem Oberbegriff des Patentanspruchs 1, wobei dieser ein mehrteiliges Gehäuse hat, das eine Gehäusefront zur Begrenzung eines Zapfbereichs zur Entnahme eines zubereiteten Getränks und eine Rückwand zur Abdeckung eines Innenbereichs zur Aufnahme einer Geräteelektronik und einer Verschlauchung aufweist.

Ein bekannter Getränkespender ist z.B. in der US 5,217,288 gezeigt. Der Getränkespender dient zum Bereitstellen von Getränken wie Kaffee und hat ein Gehäuse, das aus drei Gehäuseelementen besteht. Es hat eine Gehäusefront zur Begrenzung eines offenen Zapfbereichs, sowie eine Rückwand und ein Deckenwandung zur Bildung eines geschlossenen Innenbereichs zur Positionierung einer Geräteelektronik, einer Verschlauchung und eines Wassertanks. Die Gehäuseelemente sind formschlüssig miteinander verrastbar, wobei sie jedoch derart zueinander angeordnet sind, dass bei geöffnetem Innenbereich lediglich eine Sichtprüfung durchgeführt werden kann. Eine Funktionsprüfung ist nicht möglich.

Aus der EP 1 715 779 B1 ist ein Getränkespender mit einem zweiteiligen Gehäuse bekannt, das eine Gehäusefront zur Begrenzung eines Zapfbereichs und eine Rückwand zur Bildung eines Innenbereichs zur Aufnahme einer Geräteelektronik und einer Verschlauchung hat. Zur Anordnung eines Wassertanks ist in die Rückwand ein von außen zugänglicher Speicherbereich integriert. Jedoch ist auch bei diesem Getränkespender bei geöffnetem Innenbereich keine Funktionsprüfung, sondern lediglich eine Sichtprüfung möglich.

Die DE 73 19 728 U zeigt einen Getränkespender mit einem nicht mehrteiligen Gehäuse, das einen Sockel und einen Boden hat. Der Sockel bildet eine integrale Rückwand, die nicht demontierbar ist. Ein Wassertank liegt oben auf dem Sockel auf.

Die DE 20 2009 004756 U1 zeigt einen Getränkespender mit einem mehrteiligen Gehäuse, das eine konkave Rückwand hat, die über Seitenteile mit einer konkaven Gehäusefront verbunden ist.

Die DE 100 52 900 A1 zeigt einen Getränkespender mit einem mehrteiligen Gehäuse, das eine flache Rückwand hat. Die Rückwand ist fest mit einem Rahmen verbunden, der die Elektronik- und Verschlauchungselemente trägt. Ebenso sind Verschlauchungselemente im Bereich der Gehäusefront ausgebildet, was die Bereitstellung von entsprechenden Kupplungen erfordert. Zwischen der Rückwand und der Gehäusefront ist je nach Bentrachtungsweise ein U-förmiges Zwischengehäuseabschnitt angeordnet oder der Rahmen.

Die DE 697 16 066 T2 zeigt einen Getränkespender mit einem mehrteiligen Gehäuse, das eine äußere Frontwand, zwei äußere Seitenwände, eine äußere Rückwand und einen äußeren Boden hat. Zudem hat das Gehäuse eine innere Frontwand, eine innere Rückwand, zwei innere Seitenwände und einen inneren Boden. Das Gehäuse zeigt eine horizontale Trennebene, mittels der die einzelnen Wände in obere und untere Wandhälften unterteilt sind.

Aufgabe der Erfindung ist es, einen Getränkespender zu schaffen, der die vorgenannten Nachteile beseitigt und eine Funktionsprüfung bei geöffnetem Gehäuse ermöglicht.

Diese Aufgabe wird gelöst durch einen Getränkespender mit den Merkmalen des Patentanspruchs 1. Vorteilhafte Aus- und Weiterbildungen, welche einzeln oder in Kombination miteinander einsetzbar sind, sind Gegenstand der jeweils abhängigen Ansprüche.

Ein erfindungsgemäßer Getränkespender hat ein mehrteiliges Gehäuse, das eine Gehäusefront zur Begrenzung eines Zapfbereichs zur Entnahme eines zubereiteten Getränks und eine Rückwand zur Abdeckung eines Innenbereichs zur Aufnahme einer Geräteelektronik und einer Verschlauchung hat. Erfindungsgemäß ist die Rückwand frei von einem Elektronikelement und von einem Verschlauchungselement, wobei der Getränkespender einen Montagerahmen mit einem Bodenelement hat, von dem sich ein im Bereich einer vertikalen Trennebene der Gehäusefront und der Rückwand liegendes Wandelement orthogonal erstreckt, und die Elektronikelemente und die Verschlauchungselemente an einer vertikalen Trennwand angeordnet sind, die sich von dem Wandelement erstreckt und die bei demontierter Rückwand zusammen mit dem Wandelement einen Speicherraum zur Anordnung des Wassertanks bildet.

Dadurch, dass die Rückwand frei von einem Elektronikelement und einem Verschlauchungselement ist, kann bei demontierter Rückwand eine Funktionsprüfung durchgeführt werden, da die Geräteelektronik und die Verschlauchung komplett montiert sind und somit der Gerätespender voll einsatzfähig ist. Ein Elektronikkreis und ein Verschlauchungskreis sind bei demontierter Rückwand geschlossen. Elektronik- bzw. Elektrostecker und Schlauchenden und befinden sich in ihren Soll-Positionen und bilden keine losen Elektronik- oder Verschlauchungselementenenden. Das Gerät kann offen geprüft werden und Fehler wie z.B. undichte Wasserschläuche können schnell erkannt werden. Unnötige Zerlegearbeiten, wie sie bei fehlerhaften Sichtprüfungen auftreten können, werden verhindert. Während der Fertigung kann der Getränkespender bis auf die Rückwand vollständig montiert werden und dann in diesem offenen Zustand in einem Prüfstand einer Sichtprüfung und einer Funktionsprüfung mit montiertem Wassertank unterzogen werden.

Zur Erleichterung einer Montage und Demontage kann die Rückwand zumindest ein Rastelement zur lösbaren Verrastung aufweisen. Die Verrastung der Rückwand erleichtert die Montage und die Demontage insofern, als dass diese jeweils ohne bzw. nahezu ohne Werkzeuge durchgeführt werden kann.

Um ein versehentliches Öffnen des Gehäuses bzw. eine Demontage der Rückwand zu verhindern, ist es vorteilhaft, wenn das zumindest eine Rastelement im normalen Betrieb des Getränkespenders verdeckt ist. Dies lässt sich beispielsweise dadurch erreichen, dass das zumindest eine Rastelement außerhalb eines Sichtbereichs eines Benutzers positioniert ist. Beispielsweise kann es an der Rückwand bodenseitig zur Verrastung mit einem Gegenelement des Montagerahmens angeordnet sein. Alternativ kann das zumindest eine Rastelement beispielsweise hinter einem Sichtschutz bzw. einer Abdeckung angeordnet sein.

Insbesondere kann die Verrastung auch innerhalb des Gehäuses erfolgen, wobei diese zur Öffnung durch eine Werkzeugöffnung zugänglich ist.

Um eine einseitige Belastung beispielsweise beim Transport des Gerätespenders zu verhindern, kann das zumindest eine Rastelement in etwa mittig der Rückwand angeordnet sein.

Eine aus fertigungstechnischer Sicht sowie aus Montage- und Demontagesicht einfache Verrastung lässt sich dadurch erzielen, dass das zumindest eine Rastelement ein sich quer zur Montagerichtung erstreckender Raststift und das Gegenelement eine sich in Montagerichtung erstreckender Rastnut ist, die an einem elastisch verformbaren Wandabschnitt des Montagerahmens ausgebildet ist.

Zur Stabilisierung der Rückwand im montierten Zustand kann die Rückwand seitliche Stützhaken zum Wirkeingriff mit Laschen des Montagerahmens aufweisen.

Zur weiteren Erhöhung der Stabilität des montierten Gehäuses können die Gehäusefront und die Rückwand zumindest jeweils ein Sicherungselement aufweisen, das entfernt von der Rastnut und dem Raststift angeordnet ist.

Die Sicherungselemente sind fertigungstechnisch einfach herstellbar, wenn zum Beispiel die Gehäusefront zumindest einen Sicherungsanschlag und die Rückwand zumindest eine Sicherungszunge aufweist, die im montieren Zustand an dem Sicherungsanschlag anliegt, so dass die Rückwand lagestabilisiert ist.

Die Montage lässt sich weiter vereinfachen, wenn die Gehäusefront und die Rückwand seitliche Führungselemente zum Führen der Rückwand beim Montieren haben. Gleichzeitig können die Führungselemente die Gehäusefront und die Rückwand im montierten Zustand stabilisieren und somit zur Erhöhung der Steifigkeit des mehrteiligen Gehäuses beitragen.

Bevorzugterweise sind die Führungselemente derart ausgebildet, dass sie gleichzeitig als Dichtelemente zum Abdichten des Gehäuses in seiner von der Gehäusefront und der Rückwand gebildeten Trennebene dienen. Dies kann bspw. dadurch erreicht werden, dass die Führungselemente sich in Montagerichtung erstreckende und überlappende Führungsvorsprünge und Führungsstege sind.

Zur Abdichtung des Gehäuses in Querrichtung kann die Gehäusefront zumindest einen sich quer zu den Führungselementen erstreckenden Dichtsteg aufweisen.

Sonstige vorteilhafte Ausführungsbeispiele der Erfindung sind Gegenstand weiterer Unteransprüche.

Die Erfindung eignet sich insbesondere zur Bereitstellung eines montage- und demontagefreundlichen Getränkespenders, der bei demontierter Rückwand eine Funktionsprüfung ermöglicht.

Im Folgenden wird ein bevorzugtes Ausführungsbeispiel der Erfindung anhand schematischer Darstellungen näher erläutert. Es zeigen:
- Figur 1: eine rückwärtige perspektivische Darstellung eines erfindungsgemäßen Getränkespenders,
- Figur 2: eine Unteransicht des Getränkespenders,
- Figur 3: eine rückwärtige perspektivische Darstellung des Getränkespenders mit demontierter Rückwand,
- Figur 4: eine Einzeldarstellung der Rückwand,
- Figur 5: eine perspektivische Darstellung einer Verrastung der Rückwand mit einem Montagerahmen, und
- Figur 6: einen Montageschritt zur Montage der Rückwand.

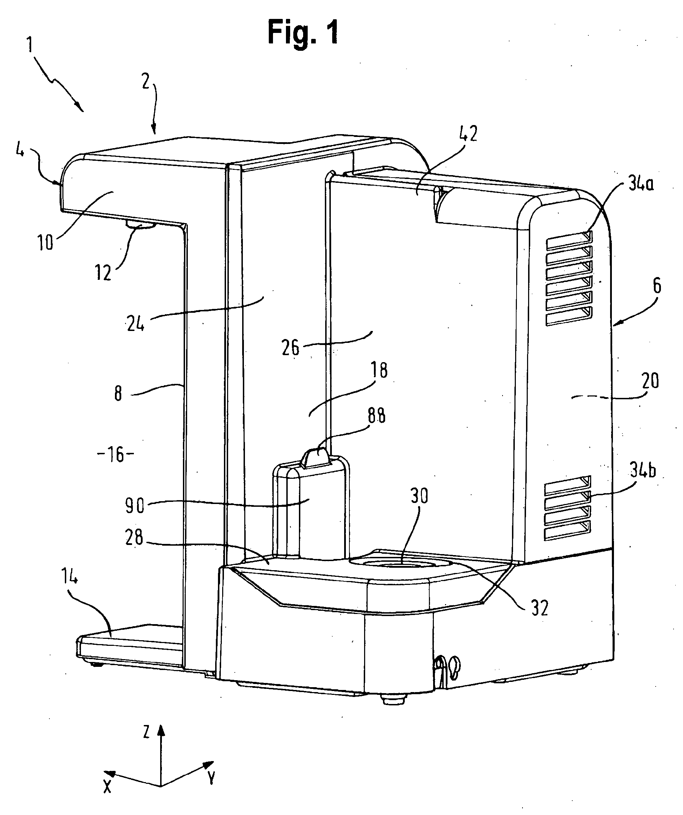

Wie in Figur 1 gezeigt, hat ein erfindungsgemäßer Getränkespender 1 ein mehrteiliges Gehäuse 2, das eine Gehäusefront 4 und eine Rückwand 6 aufweist. Der Getränkespender 1 dient insbesondere zum Bereitstellen von Heißwasser.

Die Gehäusefront 4 hat eine L-förmige Gestalt mit einer sich in Hochrichtung z des Getränkespenders erstreckenden Vertikalwandung 8 und mit einem von der Vertikalwandung 8 in Längsrichtung x des Getränkespenders kragarmartig hervorspringenden horizontalen Kopfabschnitt 10. Der Kopfabschnitt 10 dient zur Aufnahme eines Getränkeauslasses 12 und begrenzt zusammen mit einem unteren Tropfbereich 14 zur Positionierung eines Gefäßes zum Auffangen des Getränks und der Vertikalwandung 8 einen offenen Zapfbereich 16.

Die Rückwand 6 definiert einen offenen Speicherbereich 18 zur Aufnahme eines nicht gezeigten Wassertanks und einen Innenbereich 20 zur Abdeckung einer für einen Betrieb des Getränkespenders 1 notwendigen Geräteelektronik und einer Verschlauchung. Der Speicherbereich 18 wird von zwei orthogonal zueinander stehenden Wandungen 24, 26 der Rückwand 6 seitlich begrenzt, die sich vertikal von einem Bodenabschnitt 28 der Rückwand 6 erstrecken. Zur Verbindung des Wassertanks mit einem geräteinternen Wasseranschluss 30 ist in dem Bodenabschnitt 28 eine kreisförmige Öffnung 32 ausgebildet. Der Innenbereich 20 ist vollumfänglich geschlossen und kommuniziert lediglich über Belüftungsschlitze 34a, 34b mit der Außenumgebung. Die Geräteelektronik umfasst bspw. Elektronik- bzw. Elektroelemente wie ein Heizelement und einen Temperaturregler. Die Verschlauchung kann unter Anderem Elemente wie Schläuche, eine Pumpe 22, Anschlüsse, Rohrverbindungen etc. umfassen.

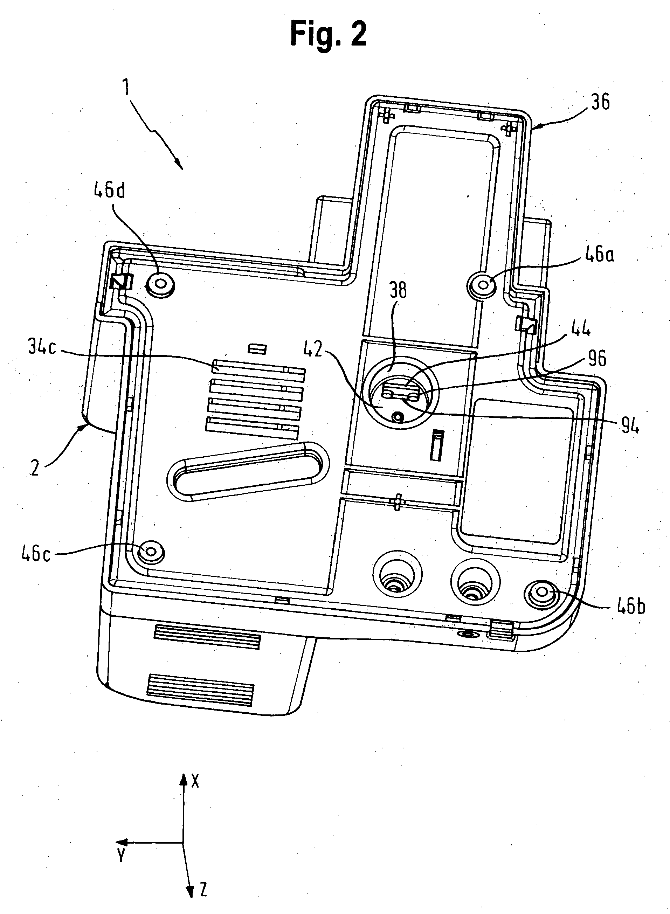

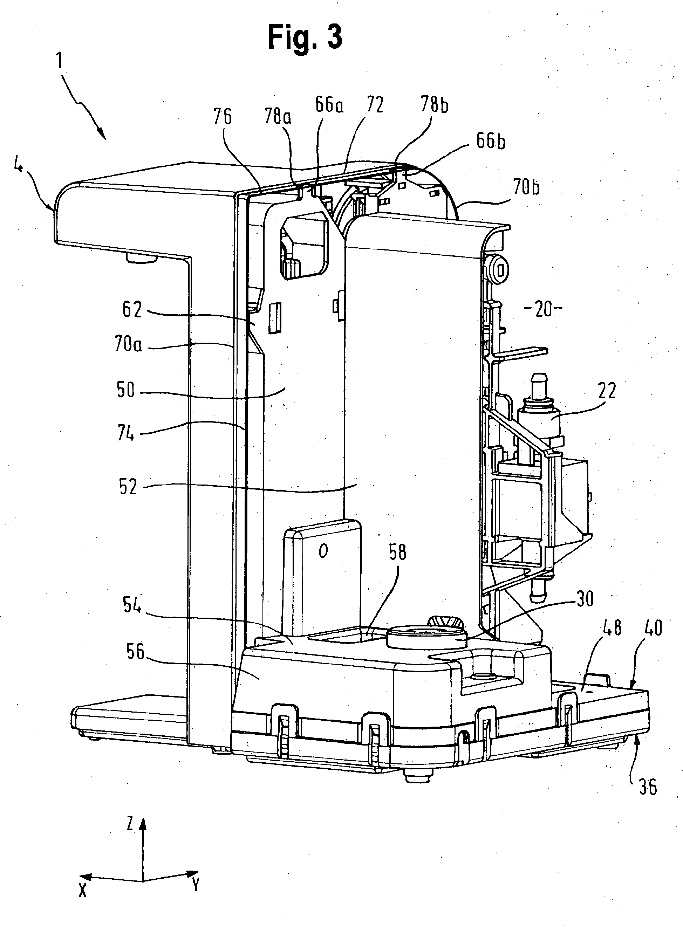

Wie in Figur 2 gezeigt, hat das Gehäuse 2 zudem eine Bodenwandung 36, in der mittig bzw. nahezu mittig ein nach innen gerichteter Dom 38 ausgebildet ist. Der Dom 38 ist im montierten Zustand im Bereich einer Verrastung der Rückwand 6 mit einem Montagerahmen 40 (s. Figur 3) angeordnet und weist in seiner Axialwandung 42 eine schlitzartige Werkzeugöffnung 44 zum Durchstecken eines Werkzeugs zur Öffnung der Verrastung auf.

Zur stabilen und rutschfesten Positionierung des Getränkespenders 1 auf einer Unterlage weist die Bodenwandung 36 eine Vielzahl von zylinderförmigen Füßen 46a, 46b, 46c, 46d auf. Zur Belüftung des Innenbereichs 20 sind in der Bodenwandung 36 ebenfalls Belüftungsschlitze 34c ausgebildet.

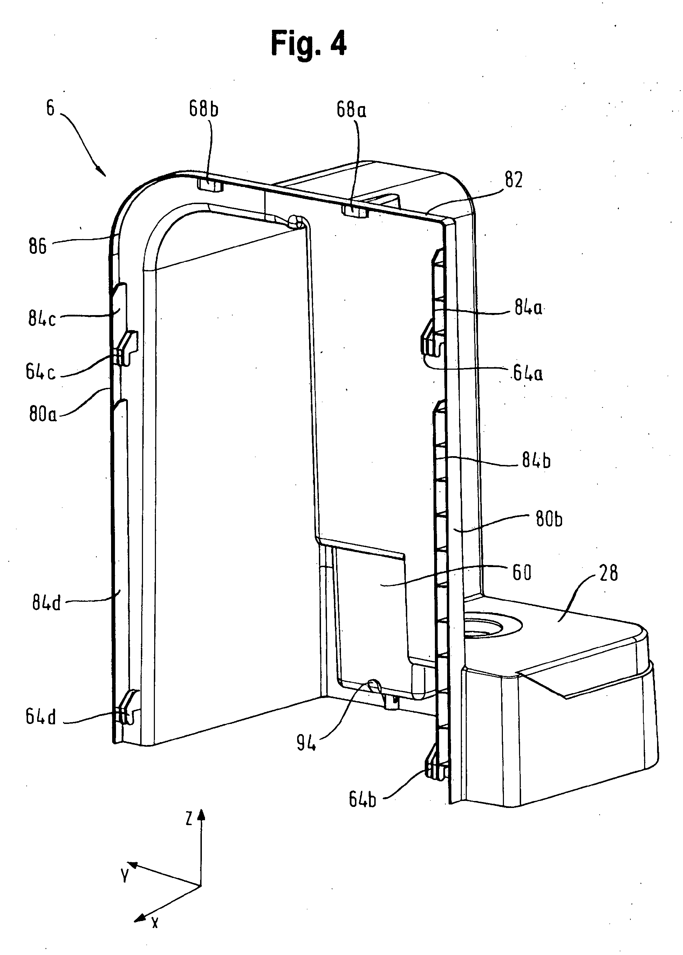

Wie in Figur 3 gezeigt, hat der Montagerahmen 40 ein Bodenelement 48, von dem sich ein im Bereich einer vertikalen Trennebene der Gehäusefront 4 und der Rückwand 6 liegendes Wandelement 50 orthogonal erstreckt. Zur Befestigung der Geräteelektronik und der Verschlauchung ist an dem Wandelement 50 eine sich in Hochrichtung z erstreckende Trennwand 52 angeordnet, die bei demontierter Rückwand 6 zusammen mit dem Wandelement 50 einen Speicherraum zur Anordnung des Wassertanks bildet. Zum Abstellen des Wassertanks ist auf dem Bodenelement 48 ein Sockel 54 angeordnet, dessen seitliche Sockelwandung 56 zumindest im Bereich der Trennebene zur erleichterten Montage schräg in Montagerichtung und somit in Hochrichtung z angestellt ist. Zur Verrastung der Rückwand 6 mit dem Montagrahmen 40 ist in einem Sbckelbereich zwischen dem Wandelement 50 und dem Anschluss 30 eine rechteckige Ausnehmung 58 zum Einführen eines Rücksprungs 60 (s. Figur 4) der Rückwand 6 vorgesehen.

Zur Abstützung der Rückwand 6 weist das Wandelement 50 eine Vielzahl von sich in Querrichtung y erstreckenden Laschen 62 auf, an denen die Rückwand 6 mit entsprechend ausgebildeten Stützhaken 64 (s. Figur 4) im montierten Zustand angreift. Aufgrund der Perspektive ist in Figur 3 jedoch nur eine Lasche 62 zu erkennen. Zudem weist das Wandelement 50 an seinem von dem Bodenelement 48 entfernten Kopfbereich zwei Sicherungsanschläge 66a, 66b zum Zusammenwirken mit rückwandseitigen Sicherungszungen 68a, 68b (s. Figur 4) auf.

Die Gehäusefront 4 hat einen in der Trennebene liegenden U-förmigen Kontaktbereich, der im montierten Zustand der Rückwand 6 zugewandt ist. Der Kontaktbereich hat zwei vertikale Seitenwandungen 70a, 70b, die über eine sich in Querrichtung y des Getränkespenders 1 erstreckende horizontale Querwandung 72 miteinander verbunden sind. Zur Führung der Rückwand 6 bei der Montage sind an den Seitenwandungen 70a, 70b Führungsstege 74 ausgebildet, die zudem eine Abdichtung des Gehäuses 2 in der Trennebene in Hochrichtung z bewirken. Aufgrund der Perspektive ist in Figur 3 jedoch nur ein Führungssteg 74 sichtbar. Zur Abdichtung des Gehäuses 2 in Querrichtung y ist an der Querwandung 72 ein Dichtsteg 76 ausgebildet, der von zwei Ausnehmungen 78a, 78b zur Aufnahme der rückwandseitigen Sicherungszungen 68a, 68b unterbrochen ist.

Wie in Figur 4 gezeigt, ist die Rückwand 6 haubenartig ausgebildet. Sie ist frei von einem Elektronikelement und von einem Verschlauchungselement, wodurch eine vollständige Funktionsprüfung des Getränkespenders 1 bei demontierter Rückwand 6 möglich ist. Insbesondere lässt sich der geräteseitige Wassertank bei demontierter Rückwand 6 in dem Speicherraum montieren und sich somit der Getränkespender 1 autark auch außerhalb eines Prüfstandes vollumfänglich prüfen.

Die Rückwand 6 hat einen U-förmigen Anlagebereich, der im montierten Zustand dem U-förmigen Kontaktbereich der Gehäusefront 4 zugewandt ist. Der Anlagebereich weist zwei im Wesentlichen parallel zueinander verlaufende Seitenwandungen 80a, 80b auf, die über eine sich quer erstreckende Querwandung 82 miteinander verbunden sind. Zwischen den Seitenwandungen 80a, 80b sind vier Führungsvorsprünge 84a, 84b, 84c, 84d angeordnet, von denen gemäß der Darstellung in Figur 4 die unteren Führungsvorsprünge 84b, 84d wesentlich länger als die oberen Führungsvorsprünge 84a, 84c ausgebildet sind. Jeweils zwei Führungsvorsprünge 84a, 84b, 84c, 84d sind einer Seitenwandung 80a, 80b zugeordnet, wobei sie paarweise über jeweils einen sich in Montagerichtung erstreckenden nicht bezifferten Montagespalt von den Seitenwandungen 80a, 80b beabstandet sind. Die Querwandung 82 weist zum Aufnahme des gehäusefrontseitigen Dichtstegs 76 innenwandseitig eine entsprechende Zurückstufung 86 auf. Die Sicherungszungen 68a, 68b erstrecken sich innenwandseitig orthogonal von der Querwandung 82.Die Stützhaken 64a, 64b, 64c, 64d sind paarweise innenliegend zu den Führungsvorsprüngen 84a, 84b, 84c, 84d positioniert. Dabei sind sie derart positioniert, dass sie in Montagerichtung betrachtet jeweils am vorderen Endabschnitt der Führungsvorsprünge 84a, 84b, 84c, 84d angeordnet sind.

Zur Sicherung des Wassertanks hat die Rückwand 6, wie insbesondere in Figur 1 gezeigt, eine untere Positionierzunge 88, die sich in Hochrichtung z von einem Vorbau 90 erstreckt, und einen oberen Positioniersteg 92, der sich in Hochrichtung z von Gehäuseabschnitt 26 erstreckt.

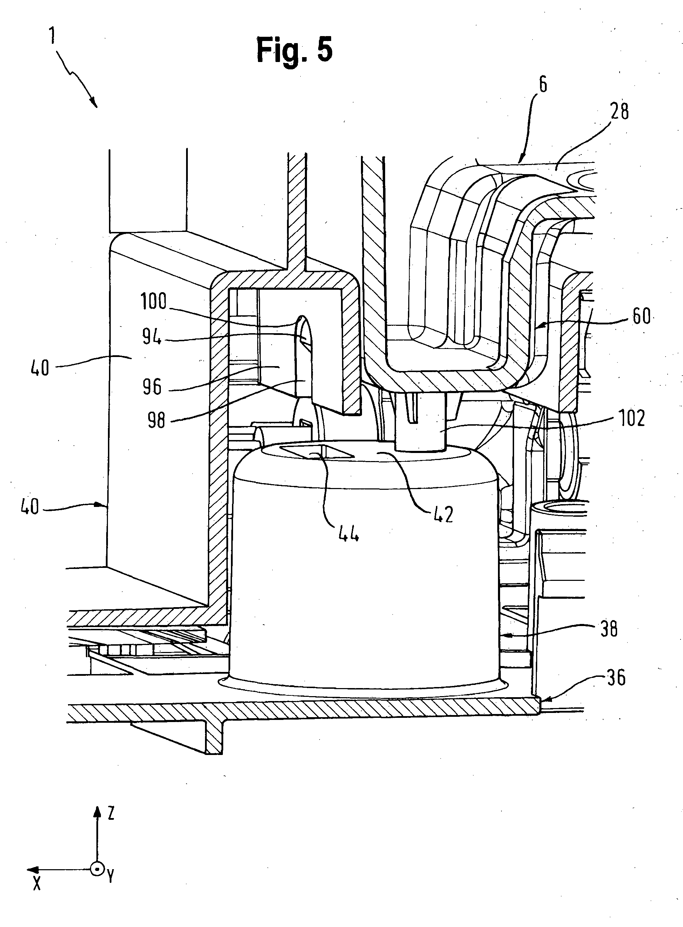

Gemäß Figur 4 erstreckt sich der Rücksprung 60 etwa mittig der Rückwand 6 rückseitig des Bodenabschnitts 28. Er hat mittig an seinem unteren Ende einen sich in Längsrichtung x und quer zu Montagerichtung erstreckenden Raststift 94. Zur Aufnahme des Raststifts 94 weist der Montagerahmen 40 wie in Figur 5 gezeigt, einen elastischen Wandungsabschnitt 96 auf, der sich parallel zum Rücksprung 60 in Hochrichtung z erstreckt. In dem Wandungsabschnitt 96 ist eine sich in Montagerichtung geöffnete Rastnut 98 mir einem kopfseitigen Nutgrund 100 ausgebildet. Zur Stabilisierung der Verrastung kann stirnseitig am Rücksprung 60 ein Schraubdorn 102 ausgebildet sein, der sich an der Axialwandung 42 des Doms 38 abstützt und mit dieser über eine Schraube form- und kraftschlüssig verbindbar ist.

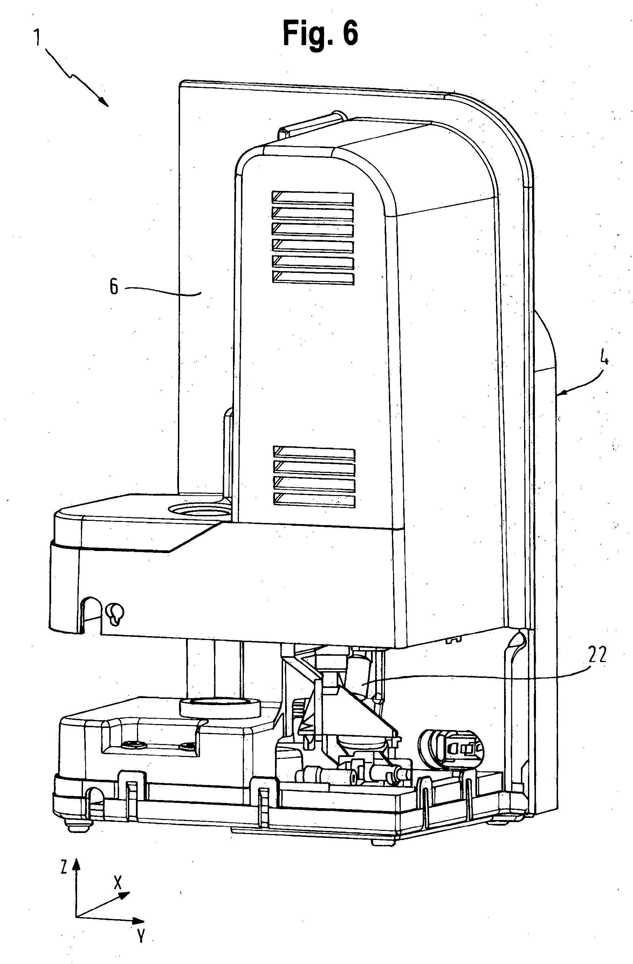

Gemäß der Darstellung in Figur 6 wird bei der Montage der Getränkespenders 1 vollständig bis auf die Rückwand 6 vormontiert. Ein wasserführender Elektronikkreis und ein Verschlauchungskreis sind geschlossen, so dass der Getränkespender 1 einer vollständigen Funktionsprüfung unterzogen werden kann. Nach der Vormontage und nach der Funktionsprüfung wird die elektronik- und verschlauchungselementenfreie Rückwand 6 montiert. Hierzu wird diese derart zur Gehäusefront 4 positioniert, dass die Führungsstege 74 in die Montagespalte zwischen den Führungsvorsprüngen 84a, 84b, 84c, 84d und den Seitenwandungen 80a, 80b eintauchen. Die Rückwand 6 wird entlang den Montagespalten in Montagerichtung nach unten bewegt, bis die Rastzunge 94 in die Rastnut 98 formschlüssig eingreift und die Rückwand 6 verriegelt ist. Dabei wird der Wandungsabschnitt 96 des Montagerahmens 46 durch den Raststift 94 aus seiner Grundstellung in Längsrichtung x elastisch verformt, bis der Raststift 94 in die Rastnut 98 eingreift. Nach dem Eingriff des Raststiftes 94 in die Rastnut 98 entspannt sich der Wandungsabschnitt 96 in Richtung seiner Grundstellung und umschließt den Raststift 94 mit seinem Nutgrund 100. Die hintere Rückwandung 6 ist nun lösbar montiert und über die Stützhaken 64a, 64b, 64c, 64d, die Führungsstege 74 sowie die zwischen die Querwandung 72 der Gehäusefront 4 und die Sicherungsanschläge 66a, 66b eintauchenden Sicherungszungen 68a, 68b lagestabilisiert. Zudem ist das Gehäuse 2 im Bereich der Trennebene durch die sich überlappenden Führungsstege 74 und Führungsvorsprünge 84a, 84b, 84c, 84d sowie durch den in die Zurückstufung 86 eintauchenden Dichtsteg 76 gegen Verschmutzungen abgedichtet. Dann wird der Wassertank in dem Speicherbereich 18 angeordnet, wobei die Positionierzunge 88 und der Positioniersteg 92 in entsprechende wassertankseitige Ausnehmungen eingreifen.

Zur Demontage der Rückwand 6 wird zuerst der Wassertank entnommen. Dann wird der Raststift 94 bspw. durch Einführen eines Schlitzschraubendreher in die Werkzeugöffnung 44 aus der Verriegelung gelöst und die Rückwand 6 in Gegenrichtung nach oben abgenommen. Dabei wird der Wandabschnitt 96 des Montagerahmens 46 durch den Schlitzschraubendreher derart aus seiner Grundstellung in Längsrichtung x elastisch verformt, dass der Raststift 94 von dem Nutgrund 100 freigegeben wird.

Offenbart ist ein Getränkespender mit einem mehrteiligen Gehäuse, das eine Gehäusefront zur Begrenzung eines Zapfbereichs zur Entnahme eines zubereiteten Getränks und eine Rückwand zur Abdeckung eines Innenbereichs zur Aufnahme einer Geräteelektronik und einer Verschlauchung hat, wobei die Rückwand frei von einem Elektronikelement und von einem Verschlauchungselement ist.

### Bezugszeichenliste

- 1: Getränkespender
- 2: Gehäuse
- 4: Gehäusefront
- 6: Rückwand
- 8: Vertikalwand
- 10: Kopfabschnitt
- 12: Auslass
- 14: Tropfbereich
- 16: Zapfbereich
- 18: Speicherbereich.
- 20: Innenbereich
- 22: Pumpe
- 24: Gehäuseabschnitt
- 26: Gehäuseabschnitt
- 28: Bodenabschnitt
- 30: Anschluss
- 32: Öffnung
- 34a, b, c: Belüftungssschlitz
- 36: Bodenwandung
- 38: Dom
- 40: Montagerahmen
- 42: Axialwandung
- 44: Werkzeugöffnung
- 46a, b, c, d: Fuß
- 48: Bodenelement
- 50: Wandelement
- 52: Trennwand
- 54: Sockel
- 56: Sockelwandung
- 58: Ausnehmung
- 60: Rücksprung
- 62: Lasche
- 64a, b, c, d: Stützhaken
- 66a, b: Sicherungsanschlag
- 68a,b: Sicherungszunge
- 70a,b: Seitenwandung
- 72: Querwandung
- 74: Führungssteg
- 76: Dichtsteg
- 78a, b: Ausnehmung
- 80a,b: Seitenwandung
- 82: Querwandung
- 84a,b,c,d: Führungsvorsprung
- 86: Zurückstufung
- 88: Positionierzunge
- 90: Vorbau
- 92: Positioniersteg
- 94: Raststift
- 96: Wandungsabschnitt
- 98: Rastnut
- 100: Nutgrund
- 102: Schraubdorn

- z: Gerätehochrichtung
- x: Gerätelängsrichtung
- Y: Gerätequerrichtung

## Patentansprüche

1. Getränkespender (1), mit einem mehrteiligen Gehäuse (2), das eine Gehäusefront (4) zur Begrenzung eines Zapfbereichs (16) zur Entnahme eines zubereiteten Getränks und eine Rückwand (6) zur Abdeckung eines Innenbereichs (20) zur Aufnahme einer Geräteelektronik und einer Verschlauchung hat, **dadurch gekennzeichnet, dass** die Rückwand (6) frei von einem Elektronikelement und von einem Verschlauchungselement ist, wobei der Getränkespender (1) einen Montagerahmen (40) mit einem Bodenelement (48) hat, von dem sich ein im Bereich einer vertikalen Trennebene der Gehäusefront (4) und der Rückwand (6) liegendes Wandelement (50) orthogonal erstreckt, und die Elektronikelemente und die Verschlauchungselemente an einer vertikalen Trennwand (52) angeordnet sind, die sich von dem Wandelement (50) erstreckt und die bei demontierter Rückwand (6) zusammen mit dem Wandelement (50) einen Speicherraum zur Anordnung des Wassertanks bildet.

2. Getränkespender nach Anspruch 1, wobei die Rückwand (6) zumindest ein Rastelement (94) zur lösbaren Verrastung aufweist.

3. Getränkespender nach Anspruch 2, wobei das zumindest eine Rastelement (94) bodenseitig zur Verrastung mit einem Gegenelement (98) des Montagerahmens (40) positioniert ist.

4. Getränkespender nach Anspruch 2 oder 3, wobei die Verrastung innerhalb des Gehäuses (2) erfolgt und diese zur Öffnung durch eine Werkzeugöffnung (44) zugänglich ist.

5. Getränkespender nach Anspruch 2, 3 oder 4, wobei das zumindest eine Rastelement (94) in etwa mittig der Rückwand (6) angeordnet ist.

6. Getränkespender nach einem der Ansprüche 2 bis 5, wobei das zumindest eine Rastelement (94) ein sich quer zur Montagerichtung erstreckender Raststift und das Gegenelement (98) eine sich in Montagerichtung erstreckender Rastnut ist, die an einem elastisch verformbaren Wandabschnitt (96) des Montagerahmens (40) ausgebildet ist.

7. Getränkespender nach einem der vorhergehenden Ansprüche, wobei die Rückwand (6) seitliche Stützhaken (64a, 64b, 64c, 64d) zum Wirkeingriff mit Laschen (62) des Montagerahmens (40) aufweist.

8. Getränkespender nach einem der vorhergehenden Ansprüche, wobei die Gehäusefront (4) und die Rückwand (6) zumindest jeweils ein Sicherungselement (66a, 66b, 68a, 68b) aufweisen, das entfernt von der Rastnut (98) und dem Raststift (94) angeordnet ist.

9. Getränkespender nach Anspruch 8, wobei die Gehäusefront (4) zumindest einen Sicherungsanschlag (66a, 66b) und die Rückwand (6) zumindest eine Sicherungszunge (68a, 68b) aufweist.

10. Getränkespender nach einem der vorhergehenden Ansprüche, wobei die Gehäusefront (4) und die Rückwand (6) seitliche Führungselemente (74, 84a, 84b, 84c, 84d) zum Führen der Rückwand (6) beim Montieren haben.

11. Getränkespender nach Anspruch 10, wobei die Führungselemente (74, 84a, 84b, 84c, 84d) als Dichtelemente zum zumindest abschnittsweisen Abdichten des Gehäuses (2) im Bereich einer von der Gehäusefront (4) und der Rückwand (6) gebildeten Trennebene dienen.

12. Getränkespender nach einem der vorhergehenden Ansprüche, wobei die Gehäusefront (4) zumindest einen sich quer zu den Führungselementen erstreckenden Dichtsteg (76) aufweist.

## Claims

1. Drinks dispenser (1) with a multi-part housing (2), that has a housing front (4) for delimiting a tap area (16) for removing a prepared drink and a rear panel (6) for covering an interior area (20) for accommodating device electronics and a tubing, **characterised in that** the rear panel (6) is free of an electronic element and a tubing element, wherein the drinks dispenser (1) has an installation frame (40) with a floor element (48), from which a panel element (50), that is located in the area of the vertical separating plane of the housing front (4) and the rear panel (6), extends orthogonally, and the electronic elements and the tubing elements are arranged on a vertical partition panel (52), which extends from the panel element (50) and, when the rear panel (6) is dismantled, together with the panel element (50) forms a storage space for arranging the water tank.

2. Drinks dispenser according to claim 1, wherein the rear panel (6) has at least one locking element (94) for removable locking.

3. Drinks dispenser according to claim 2, wherein the at least one locking element (94) is positioned on the base for locking with a counter element (98) of the installation frame (40).

4. Drinks dispenser according to claim 2 or 3, wherein the locking takes place inside the housing (2) and is accessible through a tool opening (44) for opening.

5. Drinks dispenser according to claim 2, 3 or 4, wherein the at least one locking element (94) is arranged approximately in the middle of the rear panel (6).

6. Drinks dispenser according to one of the claims 2 to 5, wherein the at least one locking element (94) is a locking pin that extends transversely relative to the installation direction and the counter element (98) is a locking groove that extends in the installation direction, which is formed on a flexibly deformable panel section (96) of the installation frame (40).

7. Drinks dispenser according to one of the preceding claims, wherein the rear panel (6) has lateral support hooks (64a, 64b, 64c, 64d) to engage with flaps (62) of the installation frame (40).

8. Drinks dispenser according to one of the preceding claims, wherein the housing front (4) and the rear panel (6) each have at least one securing element (66a, 66b, 68a, 68b) that is arranged away from the locking groove (98) and the locking pin (94).

9. Drinks dispenser according to claim 8, wherein the housing front (4) has at least one securing stop (66a, 66b) and the rear panel (6) at least one securing tongue (68a, 68b).

10. Drinks dispenser according to one of the preceding claims, wherein the housing front (4) and the rear panel (6) have lateral guide elements (74, 84a, 84b, 84c, 84d) to guide the rear panel (6) during installation.

11. Drinks dispenser according to claim 10, wherein the guide elements (74, 84a, 84b, 84c, 84d) serve as sealing elements to at least partially seal the housing (2) in the area of a separating plane formed by the housing front (4) and the rear panel (6).

12. Drinks dispenser according to one of the preceding claims, wherein the housing front (4) has at least one sealing web (76) that extends transversely relative to the guide elements.

## Revendications

1. Distributeur de boissons (1), comportant un boîtier en plusieurs parties (2), qui comprend un front de boîtier (4) destiné à délimiter une zone de distribution (16) pour le prélèvement d'une boisson préparée et une paroi arrière (6) destinée à recouvrir une zone intérieure (20) pour contenir une électronique de l'appareil et des tuyautages, **caractérisé en ce que** la paroi arrière (6) est libre de tout élément de l'électronique et de tout élément du tuyautage, dans lequel le distributeur de boissons (1) comprend un châssis de montage (40) avec un élément de fond (48), à partir duquel un élément de paroi (50) situé dans la région d'un plan de séparation vertical du front de boîtier (4) et de la paroi arrière (6) s'étend perpendiculairement, et les éléments de l'électronique et les éléments de tuyautage sont disposés sur une paroi de séparation verticale (52), qui s'étend à partir de l'élément de paroi (50) et qui, lorsque la paroi arrière (6) est démontée, forme avec l'élément de paroi (50) un espace de stockage pour le placement du réservoir d'eau.

2. Distributeur de boissons selon la revendication 1, dans lequel la paroi arrière (6) présente au moins un élément d'encliquetage (94) pour le verrouillage détachable.

3. Distributeur de boissons selon la revendication 2, dans lequel ledit au moins un élément d'encliquetage (94) est positionné du côté du fond pour le verrouillage avec un élément opposé (98) du châssis de montage (40).

4. Distributeur de boissons selon la revendication 2 ou 3, dans lequel le verrouillage est réalisé à l'intérieur du boîtier (2) et il est accessible pour l'ouverture à travers une ouverture pour un outil (44).

5. Distributeur de boissons selon la revendication 2, 3 ou 4, dans lequel ledit au moins un élément d'encliquetage (94) est disposé environ au milieu de la paroi arrière (6).

6. Distributeur de boissons selon l'une quelconque des revendications 2 à 5, dans lequel ledit au moins un élément d'encliquetage (94) est une tige d'encliquetage s'étendant transversalement à la direction de montage et l'élément opposé (98) est une rainure d'encliquetage s'étendant dans la direction de montage, qui est formée sur une partie de paroi élastiquement déformable (96) du châssis de montage (40).

7. Distributeur de boissons selon l'une quelconque des revendications précédentes, dans lequel la paroi arrière (6) présente des crochets de soutien latéraux (64a, 64b, 64c, 64d) pour l'accrochage actif avec des pattes (62) du châssis de montage (40).

8. Distributeur de boissons selon l'une quelconque des revendications précédentes, dans lequel le front de boîtier (4) et la paroi arrière (6) présentent au moins chaque fois un élément de fixation (66a, 66b, 68a, 68b), qui est disposé à distance de la rainure d'encliquetage (98) et de la tige d'encliquetage (94).

9. Distributeur de boissons selon la revendication 8, dans lequel le front de boîtier (4) présente au moins une butée de fixation (66a, 66b) et la paroi arrière (6) présente au moins une languette de fixation (68a, 68b).

10. Distributeur de boissons selon l'une quelconque des revendications précédentes, dans lequel le front de boîtier (4) et la paroi arrière (6) comportent des éléments de guidage latéraux (74, 84a, 84b, 84c, 84d) pour le guidage de la paroi arrière (6) lors du montage.

11. Distributeur de boissons selon la revendication 10, dans lequel les éléments de guidage (74, 84a, 84b, 84c, 84d) font office d'éléments d'étanchéité pour l'étanchéité au moins locale du boîtier (2) dans la région d'un plan de séparation formé par le front de boîtier (4) et la paroi arrière (6).

12. Distributeur de boissons selon l'une quelconque des revendications précédentes, dans lequel le front de boîtier (4) présente au moins une nervure d'étanchéité (76) s'étendant transversalement aux éléments de guidage.
